# EUROPÄISCHE PATENTANMELDUNG

(11) **EP 2 022 327 A1**
(43) Veröffentlichungstag der Anmeldung: **11.02.2009**
(21) Anmeldenummer: 08012706.1
(22) Anmeldetag: 14.07.2008
(51) Int. Cl.: A01K 31/17

(54) **Käfig oder dergleichen Beherbungsraum für Geflügelhaltung**

(30) Priorität: 27.07.2007 DE 102007035643; 17.09.2007 DE 202007013005 U
(71) Anmelder: Schulte, Wilhelm, 49545 Tecklenburg (DE)
(72) Erfinder: Schulte, Wilhelm, 49545 Tecklenburg (DE)
(74) Vertreter: Busse, Harald F.W.

(57) **Zusammenfassung**

Ein Käfig (1) oder dergleichen Beherbergungsraum für Geflügel, insbesondere Hühner, wobei der Beherbergungsraum zur Aufnahme einer Kleingruppe von Tieren ausgebildet ist und für diese zumindest einen Aufenthaltsbereich (2), einen Scharrbereich (5) und/oder einen Eier-Legebereich (6) umfaßt, wird so ausgebildet, daß der Eier-Legebereich (6) und/oder der Scharrbereich (5) gegenüber einer Grundebene (2) des Käfigs (1) oder dergleichen erhöht gelegen sind (Fig. 1).

## Beschreibung

Die Erfindung betrifft einen Käfig oder ähnlichen Beherbergungsraum für Geflügel nach dem Oberbegriff des Anspruchs 1.

Gemäß neueren Tierschutzvorschriften ist bei der hiesigen Geflügelhaltung auch bei einer reinen Käfighaltung ein hinreichender Bewegungsraum für die Tiere sicherzustellen. Dies wird in der Praxis häufig so realisiert, daß eine Reihe solcher Tiere, insbesondere Hühner, als Kleingruppe von typisch 20 bis 40 Hühnern, in einem gemeinsamen Käfig oder ähnlichem abgeschlossenem Raum gehalten wird. Gegenüber einer sog. Boden- oder Freilandhaltung mit einer weitaus höheren Zahl von in Kontakt stehenden Tieren bringt diese Kleingruppenhaltung den Vorteil mit sich, daß sich die Tiere untereinander kennen und eine feste Hackordnung entwickeln können. Dadurch wird Gewalttätigkeiten innerhalb der Gruppe, wie etwa Kannibalismus, vorgebeugt.

Um einer artgerechten Haltung möglichst nahe zu kommen, ist es weiter bekannt, einen solchen Käfig für Kleingruppen mit einem Scharrbereich und/oder mit in der Regel abgedunkelten Legebereichen für Eier zu versehen.

Durch diese unterschiedlichen Bereiche ist jedoch die Grundfläche verringert, so daß eine erhebliche Enge in dem Käfig herrscht. Zudem ist die Reinigung erschwert, da im Scharrbereich und im Legebereich üblicherweise kein Gitterboden, der ein Durchfallen des Kots erlaubt, vorhanden ist. Damit während der Reinigung keine Tiere entweichen können, muß diese von oben erfolgen und kann jeweils nur einen Teil der Käfigfläche betreffen. Für ein Stapeln von mehreren Käfigen ist die Reinigung von oben zudem hinderlich.

Der Erfindung liegt das Problem zugrunde, die Lebensbedingungen der Tiere und die Handhabung zu verbessern.

Die Erfindung löst dieses Problem durch einen Käfig oder dergleichen Beherbergungsraum mit den Merkmalen des Anspruchs 1. Hinsichtlich weiterer Ausgestaltungen wird auf die abhängigen Ansprüche 2 bis 14 verwiesen.

Mit der Erfindung ist eine Kleingruppenhaltung dadurch verbessert, daß zumindest einer der Funktionsbereiche (Legebereich für Eier oder Scharrbereich) gegenüber der Grundebene erhöht ist, so daß dort mehr Platz für die Tiere geschaffen ist.

Dies gilt insbesondere, wenn die Erhöhung so groß ist, daß unter dem erhöhten Eier-Legebereich und/oder Scharrbereich ein Aufenthalt von in dem Beherbergungsraum gehaltenen Tieren ermöglicht ist. Hierfür beträgt der Vertikalabstand zwischen den Ebenen zumindest etwa 60 Zentimeter.

Besonders günstig verbleibt vor dem zumindest einen erhöhten Bereich ein bis zur oberen Begrenzung des Käfigs erstreckter Flugraum für die Tiere, so daß diese im Käfig zu der oder den erhöhten Ebene(n) flattern und ihre Flügelmuskulatur stärken können.

Sehr vorteilhaft sind sowohl ein Eier-Legebereich als auch ein Scharrbereich jeweils erhöht gegenüber der Grundebene gelegen. Die Grundebene kann dann vollständig mit einem kotdurchlässigen Boden versehen und in ihrer gesamten Erstreckung ohne Einschränkung als Aufenthaltsbereich ausgebildet sein.

Sofern der Scharrbereich und der Eier-Legebereich in zueinander einen Höhenabstand aufweisenden Ebenen angeordnet sind, kann der Flugraum für die Tiere besonders groß ausgebildet sein, was die Nähe zu einer artgerechten Haltung weiter verbessert.

Insbesondere können der Scharrbereich und der Eier-Legebereich übereinander angeordnet sein und dabei einen Höhenabstand zueinander aufweisen, der einen Aufenthalt von Tieren in beiden Bereichen ermöglicht. Damit sind dann insgesamt drei Etagen für den Aufenthalt von Tieren geschaffen, so daß bei gleichbleibender Grundfläche die Zahl der Tiere in dem Käfig oder dergleichen vergrößert werden kann. Gleichzeitig ist durch die Übereinanderlage von Scharrbereich und Eier-Legebereich die Längs- und Quererstreckung des Flugraums nicht weiter eingeschränkt, als dies durch eine einzelne Ebene der Fall wäre.

Wenn zumindest dem niedrigeren der erhöht gelegenen Bereiche eine Balustrade vorgeordnet ist, kann diese als bequemer Zwischenlandeplatz genutzt werden. Insbesondere wenn die untere der erhöhten Ebenen als Eier-Legebereich genutzt wird und dort zur Verdunklung Vorhänge angeordnet sind, ist eine solche Balustrade vor den Vorhängen sinnvoll. Diese Anordnung hat zudem den Vorteil, daß der Eier-Legebereich durch einen darüber gelegenen Scharrbereich bereits oberseitig abgedunkelt ist, so daß dort keine weiteren Maßnahmen zur Ausgestaltung des Eier-Legebereichs vorzunehmen sind. Zudem kann dann der darüber befindliche Scharrbereich zur Anhängung von Vorhängen vor den LegeAbteilen genutzt werden.

Weiterhin ist es für eine effektive Raumnutzung hilfreich, wenn der Käfig einen rechteckigen Grundriß aufweist und die erhöht gelegenen Bereiche sich jeweils zumindest nahezu über eine gesamte Längswandung des Käfigs erstrecken.

Die Handhabung ist weiter verbessert, wenn der Käfig auf seiner dem zumindest einen erhöhten Bereich gegenüber gelegenen Längsseite eine Inspektionsklappe aufweist. Diese kann sich ebenfalls über die gesamte Länge erstrecken und ermöglicht eine große Eingriffsöffnung. Gleichzeitig ist die Gefahr gering, daß Tiere durch die offene Klappe entweichen können, da diese sich überwiegend in der Grundebene oder auf den der Klappe gegenüber gelegenen Etagen aufhalten. Die Stapelbarkeit wird durch eine solche Klappe nicht beeinträchtigt.

Zu einer guten Handhabung trägt ebenfalls bei, wenn dem Eier-Legebereich eine zumindest nahezu über seine gesamte Erstreckung laufende, von außen zugängliche Ablagerinne für Eier zugeordnet ist. Diese weist dann eine erhebliche Länge auf, ein Eierstau ist leicht vermeidbar. Auch kommen die Hühner dann nicht mehr an die Eier heran, so daß die Gefahr des Zerhackens dann minimiert ist.

Bevorzugt hat der Käfig eine Gesamthöhe von zumindest 1,50 m, um einen großen Flugraum bereitzustellen. Gleichzeitig kann jeder Abstand zwischen den Etagen zumindest jeweils 50 bis 60 Zentimeter betragen. Dann steht jede Etage ohne Einschränkung durch die jeweils ganz oder teilweise darüber gelegene als Aufenthaltsbereich zur Verfügung.

Weitere Vorteile und Merkmale der Erfindung ergeben sich aus einem in der Zeichnung dargestellten und nachfolgend beschriebenen Ausführungsbeispiel des Gegenstandes der Erfindung.

In der Zeichnung zeigt:
- Fig. 1: eine schematische, perspektivische Ansicht eines erfindungsgemäßen Geflügelkäfigs zur Kleingruppenhaltung mit zwei zusätzlichen Etagen für einen Scharrbereich und für einen Legebereich,

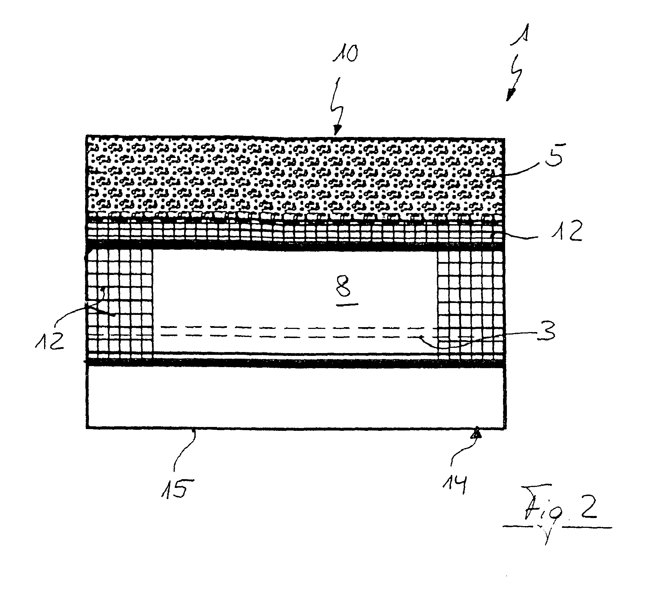

- Fig. 2: den Käfig nach Fig. 1 in Ansicht von oben,

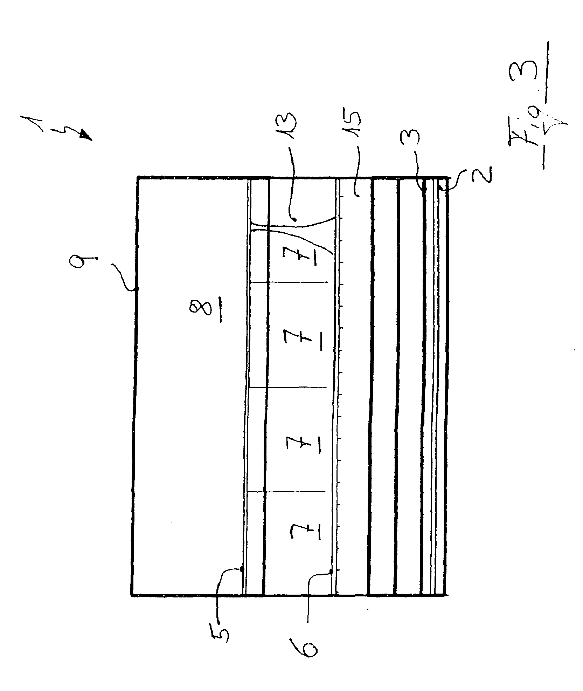

- Fig. 3: den Käfig nach Fig. 1 in Ansicht von vorne,

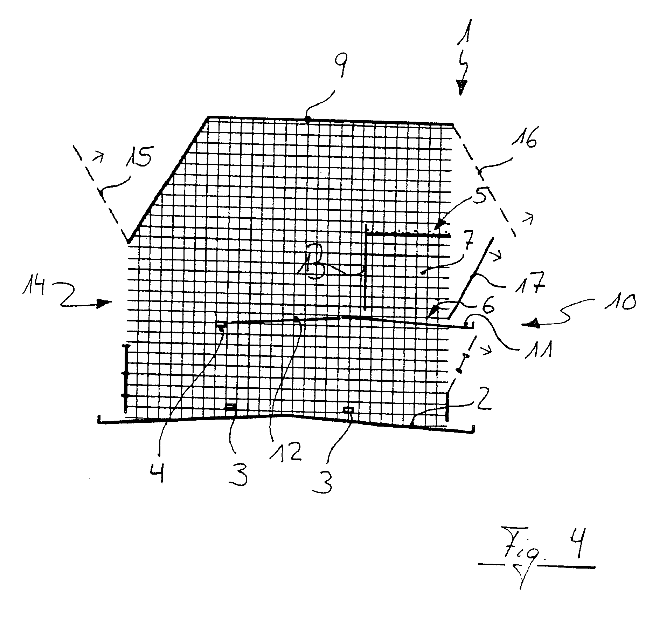

- Fig. 4: den Käfig nach Fig. 1 in Seitenansicht von rechts,
- Fig. 5: eine ähnliche Ansicht wie Fig. 4 in einer leicht abgewandelten Ausführung.

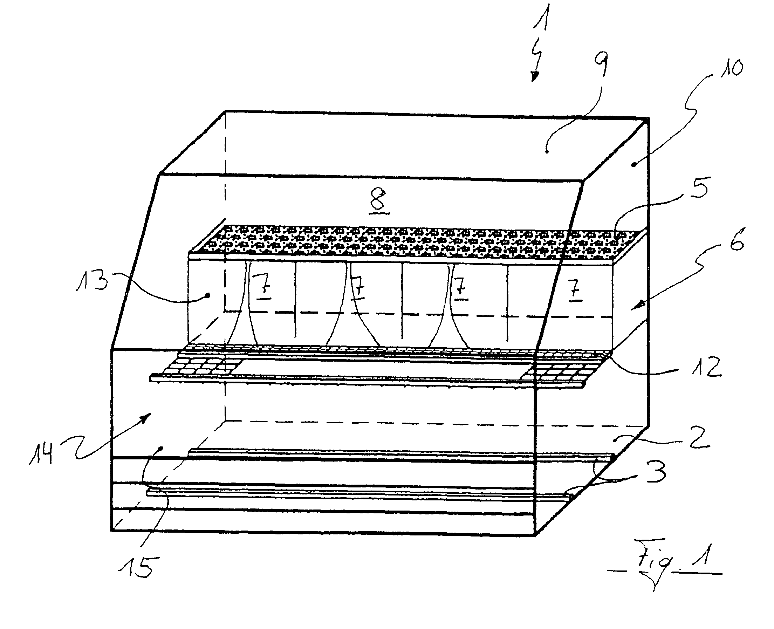

Der in Fig. 1 dargestellte Käfig 1 ist zur Aufnahme von Geflügel, insbesondere von Hühnern, vorgesehen. Er weist eine Grundebene 2 auf, die durchgehend mit einem kotdurchlässigen Gitterboden versehen sein kann. Zudem können - hier längs verlaufende - Sitzstangen 3 und bevorzugt außen liegende Wassertränken, zum Beispiel Nippeltränken, und/oder Futtertröge 4 vorgesehen sein.

Anstelle eines Käfigs im eigentlichen Sinne können auch zumindest teilweise geschlossene Wände vorgesehen sein, etwa teilweise auch gebildet durch äußere Wände eines Stallgebäudes, so daß auch ein solcher Beherbungsraum für eine Kleingruppe von Geflügel mit beansprucht ist.

Insbesondere können derartige Käfige 1 oder dergleichen auch stapelbar sein, so daß ein zur Verfügung stehender Stallraum nach oben hin effektiv ausgenutzt werden kann.

Neben der Grundebene 2 mit dem üblichen Aufenthaltsbereich weist der in der Zeichnung dargestellte Käfig 1 einen beispielsweise mit einer Matte oder insbesondere einer Einstreuung versehenen Scharrbereich 5 und einen Legebereich 6 mit mehreren Abteilen 7 zum Ablegen von Eiern auf.

Erfindungsgemäß ist der Eier-Legebereich 6 und/oder der Scharrbereich 5 gegenüber einer Grundebene 2 des Käfigs 1 oder dergleichen erhöht gelegen (Fig. 1). Gemäß dem gezeichneten Ausführungsbeispiel sind beide Bereiche 5, 6 erhöht gegenüber der Grundebene 2 gelegen. Der Höhenabstand H1 von der Grundebene 2 zu dem darüber gelegenen Eier-Legebereich 6 ist hinreichend groß, um dort den Aufenthalt von Tieren zu erlauben. Die Höhe H 1 liegt etwa mindestens bei 60 Zentimetern.

Im gezeichneten Ausführungsbeispiel sind ebenso der Scharrbereich 5 und der Eier-Legebereich 6 in unterschiedlichen Ebenen übereinander angeordnet, die zueinander einen Höhenabstand H2 aufweisen. Auch für diesen Höhenabstand H2 gilt das zum Höhenabstand H1 Gesagte.

Alternativ könnten der Scharrbereich 5 und Eier-Legebereich 6 auch in einer Ebene beispielsweise gegenüber zueinander liegen.

Dadurch, daß der Scharrbereich oberhalb des Eier-Legebereichs 6 angeordnet ist, bleibt jedoch vor diesen beiden Bereichen 5, 6 ein großer Freiraum als Flugraum 8 für die Tiere.

Dieser Flugraum 8 kann sich bis zur oberen Begrenzung 9 des Käfigs 1 erstrecken und damit eine Höhe von typisch 1,80 Metern aufweisen, so daß eine ernsthafte Flügelbenutzung für die Tiere möglich ist.

Bei einem rechteckigen Käfiggrundriß können sich die erhöhten Bereiche 5,6 jeweils zumindest nahezu über eine gesamte Längswandung 10 des Käfigs 1 oder dergleichen erstrecken. Diese weist eine Länge von typisch 180 bis 240 Zentimetern auf. Damit ergibt sich bei einer Tiefe von ca. 40 bis 60 Zentimetern in jeder Ebene eine große Aufenthaltsfläche, auf der jeweils eine große Zahl von Tieren gleichzeitig Platz finden kann.

Der Scharrbereich 5 kann etwa eine Blech- oder Plastikwanne umfassen und mit einer Matte oder insbesondere mit einer Einstreu, wie etwa Sand, versehen sein.

Der Legebereich 6 kann leicht schräg nach außen geneigt und beispielsweise mit einer gelochten oder genoppten Plastikmatte ausgekleidet sein, auf der gelegte Eier nach außen in die Entnahmerinne 11 rollen. Durch die erhebliche Länge dieser der Längsseite 10 folgenden Rinne 11 ist ein Eierstau dort leicht vermeidbar, die Gefahr von Beschädigungen - auch durch Zerhacken - ist gering.

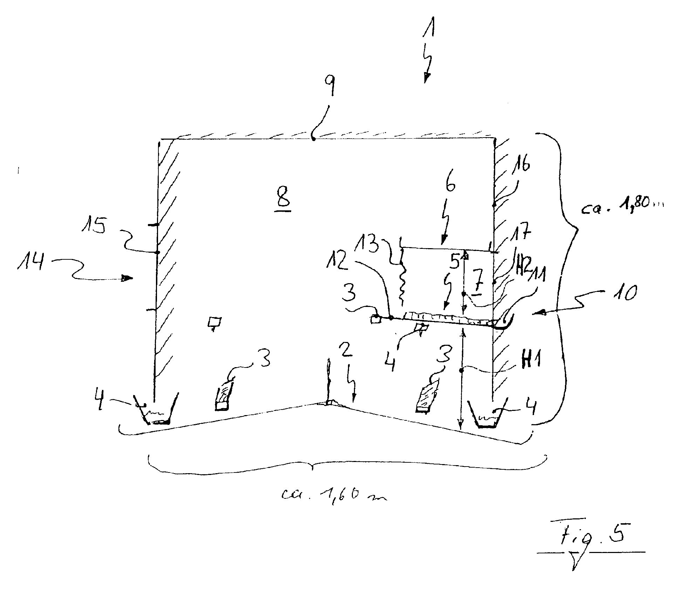

Zumindest dem niedrigeren der erhöht gelegenen Bereiche 5, 6, hier dem Legebereich 6, ist eine Balustrade 12 vorgeordnet. Damit können Hühner hier eine Landefläche vorfinden, die außerhalb von die Legeabteile 7 verdunkelnden Vorhängen 13 liegt. Diese Vorhänge 13 können an der darüber befindlichen Scharrfläche 5, die ohnehin eine Bedachung für die Legenester 7 bildet, einfach angehängt sein und aus einer undurchsichtigen, weichen Folie bestehen. Durch sie hindurch ist ein Zugang zu mehreren nebeneinander gelegenen Legeabteilen 7 ermöglicht. Die Balustrade 12 selbst weist eine Tiefe von typisch 20 bis 30 Zentimetern auf und kann auch über Eck an den Stirnseiten des Käfigs 1 fortgesetzt sein, um möglichst viel Aufenthaltsfläche für Tiere zu schaffen. Auch die Balustrade 12 kann einen gelochten Boden, zum Beispiel als Kunststoffgitterboden oder Kunststoffmatte, umfassen. Eine Abwechslung zum Gitterboden 2 der Grundebene ist dabei vorteilhaft. Auch eine weitere Sitzstange 3 kann am Rand der Balustrade 12 vorgesehen sein (Fig. 5). Ebenso ist hier eine weitere Tränke 4 möglich, um auch die Balustrade 12 als Langzeit-Aufenthaltsbereich und auch zum Schlafen nutzen zu können.

Insbesondere kann dem Käfig 1 auf seiner dem zumindest einen erhöhten Bereich 5, 6 gegenüber gelegenen, vorderen Längsseite 14 eine große Inspektionsklappe 15 zugeordnet sein. Diese muß sich nicht bis zur Grundebene 2 erstrecken, sondern kann oberhalb von dieser enden. Damit ist auch bei offener Inspektionsklappe 15 die Gefahr gering, daß Tiere durch diese entweichen. Durch die große, beispielsweise aufschwenkbare Inspektionsklappe 15 kann auch leicht eine Einstreu - zum Beispiel Sand - für den Scharrbereich 5 erneuert werden. Zudem kann unmittelbar hinter diesem Scharrbereich 5 an der dortigen Längswand 10 noch eine kleinere Inspektionsklappe 16 vorgesehen sein. Gleiches gilt auch für den Legebereich 6 unterhalb des Scharrbereiches 5. Auch hier kann über eine kleine Inspektionsklappe 17 eingegriffen werden, beispielsweise auch, um Eier, die nicht nach außen gerollt sein sollten, zu entnehmen.

In jedem Fall ist ein solcher Käfig 1 oder dergleichen Beherbergungsraum als abgeschlossene Einheit für eine Kleingruppe von typisch wenigen zehn Tieren vorgesehen, so daß diese untereinander einen Kontakt und eine Hackordnung ausbilden können, so daß es in der Regel nicht zu Verletzungen untereinander kommt. Insbesondere ist damit auch einem Kannibalismus innerhalb der Population vorgebeugt.

### Bezugszeichenliste:

- 1: Käfig oder dergleichen,
- 2: Grundebene,
- 3: Sitzstangen,
- 4: Tränken und/oder Futtertröge,
- 5: Scharrbereich,
- 6: Eier-Legebereich,
- 7: Legeabteile,
- 8: Flugraum,
- 9: Obere Käfigbegrenzung,
- 10: Längswandung,
- 11: Entnahmerinne,
- 12: Balustrade,
- 13: Vorhänge,
- 14: Vordere Längssseite,
- 15: Inspektionsklappe,
- 16: kleine Inspektionsklappe,
- 17: kleine Inspektionsklappe

## Patentansprüche

1. Käfig (1) oder dergleichen Beherbergungsraum für Geflügel, insbesondere Hühner, wobei der Beherbergungsraum zur Aufnahme einer Kleingruppe von Tieren ausgebildet ist und für diese zumindest einen Aufenthaltsbereich (2), einen Scharrbereich (5) und/oder einen Eier-Legebereich (6) umfaßt,
**dadurch gekennzeichnet,**
**daß** der Eier-Legebereich (6) und/oder der Scharrbereich (5) gegenüber einer Grundebene (2) des Käfigs (1) oder dergleichen erhöht gelegen sind.

2. Käfig (1) oder dergleichen Beherbergungsraum nach Anspruch 1,
**dadurch gekennzeichnet,**
**daß** die Erhöhung hinreichend groß ist, um unter dem erhöhten Eier-Legebereich (6) und/oder Scharrbereich (5) einen Aufenthalt von in dem Beherbergungsraum gehaltenen Tieren zu ermöglichen.

3. Käfig (1) oder dergleichen Beherbergungsraum nach einem der Ansprüche 1 oder 2,
**dadurch gekennzeichnet,**
**daß** vor dem zumindest einen erhöhten Bereich (5;6) ein bis zur oberen Begrenzung (9) des Käfigs (1) erstreckter Flugraum (8) für die Tiere verbleibt.

4. Käfig (1) oder dergleichen Beherbergungsraum nach einem der Ansprüche 1 bis 3,
**dadurch gekennzeichnet,**
**daß** sowohl ein Eier-Legebereich (6) als auch ein Scharrbereich (5) jeweils erhöht gegenüber der Grundebene (2) gelegen sind.

5. Käfig (1) oder dergleichen Beherbergungsraum nach Anspruch 4,
**dadurch gekennzeichnet,**
**daß** der Scharrbereich (5) und der Eier-Legebereich (6) in zueinander einen Höhenabstand (H2) aufweisenden Ebenen angeordnet sind.

6. Käfig (1) oder dergleichen Beherbergungsraum nach Anspruch 5,
**dadurch gekennzeichnet,**
**daß** der Scharrbereich (5) und der Eier-Legebereich (6) übereinander angeordnet sind und der Höhenabstand (H2) einen Aufenthalt von Tieren in dem niedrigeren (6) der beiden Bereiche (5;6) ermöglicht.

7. Käfig (1) oder dergleichen Beherbergungsraum nach einem der Ansprüche 1 bis 6,
**dadurch gekennzeichnet,**
**daß** zumindest dem niedrigeren (6) der erhöht gelegenen Bereiche (5;6) eine Balustrade (12) vorgeordnet ist.

8. Käfig (1) oder dergleichen Beherbergungsraum nach einem der Ansprüche 1 bis 7,
**dadurch gekennzeichnet,**
**daß** dieser einen rechteckigen Grundriß aufweist und die erhöht gelegenen Bereiche (5;6) sich jeweils zumindest nahezu über eine gesamte Längswandung (10) des Käfigs (1) oder dergleichen erstrecken.

9. Käfig (1) oder dergleichen Beherbergungsraum nach einem der Ansprüche 1 bis 8,
**dadurch gekennzeichnet,**
**daß** die Grundebene (2) einen Gitterboden aufweist.

10. Käfig (1) oder dergleichen Beherbergungsraum nach einem der Ansprüche 1 bis 9,
**dadurch gekennzeichnet,**
**daß** dieser auf seiner dem zumindest einen erhöhten Bereich (5;6) gegenüber gelegenen Längsseite (14) eine Inspektionsklappe (15) aufweist.

11. Käfig (1) oder dergleichen Beherbergungsraum,
**dadurch gekennzeichnet,**
**daß** der Grundebene (2) längs verlaufende Sitzstangen (3) und außen liegende Wasserrinnen (4) zugeordnet sind.

12. Käfig (1) oder dergleichen Beherbergungsraum nach einem der Ansprüche 1 bis 11,
**dadurch gekennzeichnet,**
**daß** dem Eier-Legebereich (6) eine zumindest nahezu über seine gesamte Erstreckung laufende, von außen zugängliche Ablagerinne (11) für Eier zugeordnet ist.

13. Käfig (1) oder dergleichen Beherbergungsraum nach einem der Ansprüche 1 bis 12,
**dadurch gekennzeichnet,**
**daß** dieser eine Gesamthöhe von zumindest 1,20 m und einen Abstand zwischen den Etagen (2;5;6) von zumindest jeweils 60 Zentimetern aufweist.

14. Käfig (1) oder dergleichen Beherbergungsraum nach einem der Ansprüche 1 bis 13,
**dadurch gekennzeichnet,**
**daß** dieser eine stapelbare Einheit ausbildet.
